# EUROPÄISCHE PATENTANMELDUNG

(11) **EP 4 389 390 A1**
(43) Veröffentlichungstag der Anmeldung: **26.06.2024**
(21) Anmeldenummer: 23213625.9
(22) Anmeldetag: 01.12.2023
(51) Int. Cl.: B29C 45/17, B29C 45/33, B60B 1/00, B60B 5/02, B60B 21/02, B29L 31/30, B29K 105/06, B29L 31/32, B29C 45/14

(54) **LAUFRADKOMPONENTE, VERFAHREN ZUR HERSTELLUNG UND WERKZEUGEINRICHTUNG**

(30) Priorität: 23.12.2022 DE 102022134718
(71) Anmelder: DT Swiss AG, 2504 Biel (CH)
(72) Erfinder: Becker, Fabian, 2504 Biel (CH); Müller, Michael, 82057 Icking (DE); Gasser, Thomas, 3036 Detligen (CH); Walthert, Martin, 3270 Aarberg (CH)
(74) Vertreter: BSB Patentanwälte Schütte & Engelen Partnerschaft mbB

(57) **Zusammenfassung**

Laufradkomponente (1), Verfahren und Werkzeugeinrichtung (50) für ein wenigstens teilweise muskelbetriebenes Fahrzeug wie ein Fahrrad (100), umfassend eine Mehrzahl von Teilkomponenten (2, 2a, 2b), die einstückig miteinander verbunden sind und die eine Felge (111) und damit ausgebildete Speichen (109) bilden, wobei die Felge (111) und die Speichen (109) durch Spritzgießen von Faserverbundwerkstoff (20) hergestellt sind. Die Teilkomponenten (2) der Felge (111) werden durch ein Spritzgussverfahren mit Fluidinjektion hergestellt, wobei der verflüssigte Faserverbundwerkstoff (20) in eine Kavität (3) einer Werkzeugeinrichtung (50) eingespritzt wird und in den noch teilweise flüssigen Faserverbundwerkstoff (20) innerhalb der Kavität (3) ein Fluid (4) zur Formung wenigstens einer Hohlkammer (5) innerhalb der Teilkomponente (2) injiziert wird. Eine weitere Teilkomponente (2a), die eine Speiche (109) bildet wird durch ein Spritzgussverfahren hergestellt, bei dem innerhalb einer weiteren Kavität (3) der Werkzeugeinrichtung (50) eine Formkerneinrichtung (52) zur Formung einer Hohlkammer (5) innerhalb der Speiche angeordnet. Der Faserverbundwerkstoff (20) wird in die weitere Kavität (3) eingespritzt. Die Formkerneinrichtung (52) wird aus dem Faserverbundwerkstoff (20) herausgezogen, um einen Hohlraum (109b) in der Speiche (10) zu bilden.

## Beschreibung

Die Erfindung betrifft eine Laufradkomponente für ein wenigstens teilweise muskelbetriebenes Fahrzeug, insbesondere ein Fahrrad, welche eine Mehrzahl von Teilkomponenten umfasst, die einstückig miteinander verbunden sind und die eine Felge und eine Mehrzahl von einstückig damit ausgebildeten Speichen bilden, wobei die Felge und die Speichen durch Spritzgießen von Faserverbundwerkstoff hergestellt sind. Die Erfindung betrifft auch ein Verfahren zur Herstellung und eine Werkzeugeinrichtung zur Herstellung einer Laufradkomponente.

Aus dem Stand der Technik sind verschiedene Laufradkomponenten bekannt geworden, welche durch Spritzgussverfahren hergestellt sind:
Mit der US 5,415,463 ist eine Felge für ein Fahrrad aus Fiberglas mit einer Faserverstärkung bekannt geworden, welche eine Hohlkammer aufweist. Die Felge ist durch ein Spritzgussverfahren hergestellt, bei dem ein Kern aus einem Harz oder auch aus einem Metall mit einem niedrigen Schmelzpunkt in eine Gussform eingelegt wird. In die Gussform wird anschließend verflüssigtes Fiberglas mit einer Faserverstärkung eingespritzt. Nachdem das Fiberglas bzw. die Glasfasern erstarrt ist bzw. sind, wird der Kern durch Erwärmung verflüssigt, wobei das Fiberglas fest bleibt. Das flüssige Kernmaterial kann aus dem fertigen Bauteil durch Öffnungen abfließen.

Nachteilig ist bei diesem Herstellungsverfahren, dass für jede Felge zunächst ein entsprechender Kern hergestellt werden muss. Mit passgenau gefertigten Kernen kann eine hohe Maßhaltigkeit erreicht werden. Derart hergestellte Laufräder können relativ leicht und dennoch belastbar sein. Auch eine reproduzierbare Herstellung ist an sich möglich. Ein erheblicher Nachteil ist aber, dass der Kern bei der Herstellung der Felge wieder "verloren geht", und, dass der Kern genau positioniert werden muss. Kostengünstig hergestellte Kerne weisen nicht die nötige Maßhaltigkeit auf. Als Ausgleich können bereits bei der Auslegung der Werkzeuge höhere Wandstärken vorgesehen werden, um solche Toleranzen zu kompensieren. Dies wirkt sich negativ auf das Gewicht der Felge aus. Oder es müssen die Kerne sehr passgenau hergestellt und entsprechend genau positioniert werden, was den Aufwand erheblich erhöht.Ein weiterer Nachteil des Verfahrens mit einem "verlorenem Kern" ist darüber hinaus die lange Verfahrensdauer. Aus diesen Gründen ist dieses bekannte Verfahren nicht für eine Fertigung von Laufradkomponenten in Serie geeignet.

Mit der US 2007 / 0 134 455 A1 und der JP H08-309 780 A sind Verfahren zur Herstellung von Laufrädern aus Faserverbundwerkstoff bekannt geworden. Dabei wird jeweils zunächst ein flüssiger Faserverbundwerkstoff in eine Form eingespritzt, wodurch die umlaufende Felge und die radial ausgerichteten Speichen mit Faserverbundwerkstoff gefüllt werden. Zur Reduzierung des Gewichts wird anschließend ein Fluid in den noch flüssigen Faserverbundwerkstoff eingespritzt, um einen Teil des noch nicht verfestigten Faserverbundwerkstoffs wieder auszutreiben. Dadurch kann in der Felge und auch in den Speichen jeweils eine Hohlkammer gebildet werden, um das Gewicht zu reduzieren. Durch die Wahl des Fluiddrucks und durch den Zeitpunkt des Einbringens des Fluids kann die verbleibende Wandstärke beeinflusst werden. Grundsätzlich funktioniert das System und es können funktionsfähige Laufräder hergestellt werden. Nachteilig ist aber, dass die Wandstärke überall so bemessen werden muss, dass das Laufrad den auftretenden Belastungen zuverlässig Stand hält. Deshalb muss die Wandstärke so hoch gewählt werden, dass das resultierende Gewicht hoch ist. Für hochwertige Laufräder aus Faserverbundwerkstoff ist das Gewicht regelmäßig zu hoch oder die Belastbarkeit zu gering.

Es ist deshalb die Aufgabe der vorliegenden Erfindung, eine Laufradkomponente, ein Verfahren zur Herstellung und eine Werkzeugeinrichtung zur Herstellung einer Laufradkomponente für ein wenigstens teilweise muskelbetriebenes Fahrzeug, insbesondere ein Fahrrad, zur Verfügung stellen, welche ein geringes Gewicht aufweist und welche prozesssicher und kostengünstig in Serienfertigung produzierbar ist.

Diese Aufgabe wird gelöst durch eine Laufradkomponente mit den Merkmalen des Anspruchs 1, durch ein Verfahren zur Herstellung einer Laufradkomponente mit den Merkmalen des Anspruchs 7 und eine Vorrichtung mit einer Werkzeugeinrichtung mit den Merkmalen des Anspruchs 11. Bevorzugte Weiterbildungen und Ausgestaltungen der Erfindung sind Gegenstand der jeweiligen Unteransprüche. Weitere Vorteile und Merkmale der vorliegenden Erfindung ergeben sich aus der allgemeinen Beschreibung und aus der Beschreibung des Ausführungsbeispiels.

Eine erfindungsgemäße Laufradkomponente für ein wenigstens teilweise muskelbetriebenes Fahrzeug, insbesondere ein Fahrrad, umfasst eine Mehrzahl von Teilkomponenten, die einstückig miteinander verbunden sind und die eine Felge und eine Mehrzahl von einstückig damit ausgebildeten Speichen bilden. Die Felge und die Speichen sind durch Spritzgießen von Faserverbundwerkstoff hergestellt. Die Teilkomponenten der Felge sind wenigstens teilweise durch ein Spritzgussverfahren mit Fluidinjektion hergestellt, welches wenigstens die nachfolgenden Verfahrensschritte umfasst:
- der wenigstens teilweise verflüssigte, und insbesondere plastifizierte, Faserverbundwerkstoff wird in wenigstens eine Kavität einer Werkzeugeinrichtung eingespritzt;
- in den wenigstens noch teilweise flüssigen (eingespritzten) Faserverbundwerkstoff innerhalb der Kavität wird wenigstens ein Fluid zur Formung wenigstens einer Hohlkammer innerhalb der Teilkomponente injiziert.

Wenigstens eine weitere Teilkomponente, welche wenigstens einen Teil einer Speiche (oder die ganze Speiche) bildet, wird wenigstens teilweise mit den nachstehenden Verfahrensschritten gebildet:
- innerhalb wenigstens einer weiteren Kavität der Werkzeugeinrichtung wird eine Formkerneinrichtung zur Formung wenigstens einer Hohlkammer innerhalb der weiteren Teilkomponente angeordnet;
- der Faserverbundwerkstoff wird in die wenigstens eine weitere Kavität zur Bildung der anderen Teilkomponente eingespritzt;
- die Formkerneinrichtung wird aus dem wenigstens teilweise erstarrten Faserverbundwerkstoff herausgezogen, um einen Hohlraum in der Speiche zu bilden.

Die erfindungsgemäße Laufradkomponente hat viele Vorteile. Ein erheblicher Vorteil der erfindungsgemäßen Laufradkomponente ist, dass die Formung der im Wesentlichen geschlossenen Hohlkammer an der Felge durch die Injektion eines Fluids in den wenigstens noch teilweise flüssigen Faserverbundwerkstoff erfolgt. Insbesondere ist dadurch kein "verlorener Kern" für die Formung der Hohlkammer notwendig. Dadurch kann eine Herstellung der Teilkomponenten der Felge mit Hohlkammer besonders kostengünstig erfolgen. Durch die Auswahl der Parameter Werkstoff, Temperatur, Druck, Fluid etc. bestehen Möglichkeiten zur gezielten Steuerung der Wandstärke der Teilkomponenten, wodurch einerseits eine hohe Belastbarkeit und andererseits ein (noch) geringes Gewicht erzielbar ist.

Dadurch, dass die einstückig mit der Felge hergestellten Teilkomponenten, welche die Speichen bilden, mittels einer (automatisch einführbaren und ausführbaren oder herausziehbaren) Formkerneinrichtung hergestellt werden, können die Speichen sehr präzise und kostengünstig hergestellt werden. Die gerade verlaufenden Speichen weisen insbesondere einen konstanten Querschnitt über wenigstens einen Hauptteil ihrer Länge auf. Der Querschnitt ist über vorzugsweise wenigstens 50% und insbesondere mehr als 66% oder mehr als 75% oder mehr als 80% (oder 90% oder mehr) der Länge der Speiche konstant.

Insbesondere variiert ein Innendurchmesser und/oder ein Außendurchmesser und/oder eine Wandstärke einer Speiche über 50% und insbesondere mehr als 66% oder mehr als 75% oder mehr als 80% der Länge der Speiche um weniger als 30% oder vorzugsweise weniger als 20% oder weniger als 10%. Die Abweichungen können auch kleiner als 5% sein. Insbesondere variiert eine Wandstärke einer Speiche über 50% und insbesondere mehr als 66% oder mehr als 75% oder mehr als 80% der Länge der Speiche um weniger als 1 mm oder vorzugsweise weniger als 0,75 mm oder um weniger als 0,5 mm oder um weniger als 0,25 mm.

Dadurch, dass die Speichen gerade bzw. linear ausgebildet sind, können ein- und ausfahrbare Kerne in Gestalt von wiederverwendbaren Formkerneinrichtungen eingesetzt werden, wodurch eine besonders hohe Passgenauigkeit und Reproduzierbarkeit erreicht werden kann. Die im normalen Regelbetrieb hohen und ständig variierenden Belastungen ausgesetzten Speichen können kostengünstig reproduzierbar mit (beliebig oft) wiederverwendbaren Formkerneinrichtungen hergestellt werden, während auch die die Felge bildenden Teilkomponenten ohne den Einsatz verlorener Kerne kostengünstig hergestellt werden können. Durch das Einfahren und Ausfahren der (wiederverwendbaren) Formkerneinrichtungen bedingt, kann auch die Positionierung der Formkerneinrichtungen automatisch und reproduzierbar (und hochgenau) erfolgen.

Darüber hinaus resultiert aus der Nutzung des Fluids ein glatter Verlauf der Oberfläche der Wandung der Hohlkammer ohne Versprünge bzw. Ecken und Kanten und Vorsprünge entlang eines Verlaufs der Oberfläche, sodass aufgenommene und wirkende Kräfte gleichmäßig aufgenommen und abgeleitet werden können. Dadurch weist die Teilkomponente weiter eine gleichmäßige und besonders dünne Wandung auf, wodurch vorteilhaft ein (besonders) geringes Gewicht der Teilkomponente ermöglicht wird.

Vorzugsweise wird als Fluid (wenigstens) eine Flüssigkeit und insbesondere Wasser eingespritzt. Vor dem Einspritzen der Flüssigkeit (insbesondere Wasser) wird ein (kleines) Gasvolumen wie z.B. ein (kleines) Luftvolumen eingespritzt. Auch ein anderes Inertgas ist möglich. Ein Vorteil eines Einspritzens eines Gasvolumens ist, dass dieses als ein Gaspolster dient. Das Gasvolumen dient insbesondere als Isolationsschicht zwischen dem Fluid und dem noch flüssigen Faserverbundstoff, um eine schnelle Erstarrung an der Fließfront zu vermeiden. Das Gasvolumen ist klein gegenüber dem gesamten eingespritzten Volumen des Fluids (insbesondere kleiner als 1/10).

Weiter kann die Laufradkomponente durch die Fluidinjektion im Spritzgussverfahren prozesssicher in Serienfertigung herstellt werden.

Weiter vorteilhaft liefert das Spritzgussverfahren auch eine sehr gute Oberflächenqualität der äußeren Oberflächen der Teilkomponente, sodass die Laufradkomponente nach dem Spritzguss nur wenig oder nahezu gar nicht nachgearbeitet werden muss. Regelmäßig werden aber Anspritzstellen, Überläufe und Werkzeugtrennstellen und dergleichen nachgearbeitet bzw. überarbeitet.

Darüber hinaus können Teilkomponenten mit Hohlkammern mit komplexen Geometrien, wie Verzweigungen oder sich entlang einem Verlauf krümmenden Querschnitten, und mit einem sich entlang eines Verlaufs veränderlichen Querschnitts hergestellt werden. Spezielle Kerne müssen nicht hergestellt werden.

Vorzugsweise umfasst der Faserverbundwerkstoff wenigstens Karbonfasern und/oder Glasfasern und wenigstens ein Trägermaterial. Vorteilhaft werden (relativ) kurzfaserige Faserverbundwerkstoffe oder Faserverbundwerkstoffe mit Fasern mittlerer Länge genutzt, welche im Spritzgussverfahren verarbeitet werden können und besonders gut dynamische Belastungen aufnehmen und weiterleiten können und eine homogene Materialqualität aufweisen. Insbesondere umfasst der Faserverbundwerkstoff wenigstens einen Faserverbundwerkstoff, welcher wenigstens ein Polyamid, wie PA66, PA6.6 oder PEEK umfasst. Vorzugsweise sind solche Faserverbundwerkstoffe vollständig recycelbar. Das ist besonders vorteilhaft und ermöglicht einen nachhaltigen Produktkreislauf.

Bevorzugt werden Faserverbundwerkstoffe mit Fasern einer Länge zwischen 0,05 mm und 40 mm eingesetzt. Werden kurzfaserverstärkte Materialien eingesetzt, beträgt vorzugsweise die durchschnittliche Faserlänge etwa 0,2 - 0,4 mm.

Besonders bevorzugt werden Faserverbundwerkstoffe mit Fasern einer (durchschnittlichen) Länge zwischen 0,2 mm und 15 mm eingesetzt. In konkreten Ausgestaltungen wurden Faserverbundwerkstoffe mit einem Anteil von Fasern von mehr als 25% oder mehr als 50% mit einer Länge größer 2 mm oder größer 5 mm und kleiner 20 mm eingesetzt. Bevorzugt werden (langfaserverstärkte) Faserverbundwerkstoffe mit Faserlängen von (durchschnittlich) ca. 12 mm eingesetzt. Es gibt Hinweise, dass damit bessere mechanische Eigenschaften erreicht werden.

Ein erheblicher Vorteil ist auch eine homogenere bzw. homogene Materialqualität. Vorteilhaft ist auch, dass eine (lokal) gezielte Ausrichtung der Fasern (oder Kurzfasern) in dem Prozess möglich ist.

Insbesondere umfasst die Hohlkammer (an den Teilkomponenten der Felge) wenigstens eine die Wandung der Teilkomponente durchgreifende Öffnung, und vorzugsweise wenigstens zwei Öffnungen, welche gegebenenfalls durch das Injizieren des Fluids zur Bildung der Hohlkammer und den Austritt des Fluids aus der Hohlkammer entstehen. Die Hohlkammer kann auch mehr als zwei Öffnungen umfassen.

Bevorzugt sind wenigstens zwei Teilkomponenten umfasst. Insbesondere sind die Teilkomponenten einstückig miteinander verbunden. Vorteilhaft können die Teilkomponenten direkt bei der Herstellung miteinander verbunden werden, indem der Faserverbundwerkstoff in alle Kavitäten (gleichzeitig oder nahezu gleichzeitig) einspritzt wird, wenigstens bevor der Faserverbundwerkstoff in einer Kavität erstarrt ist. Besonders vorteilhaft sind dadurch homogene Materialeigenschaften, und insbesondere ein homogenes Materialgefüge, aller Teilkomponenten der Laufradkomponente erzielbar, wobei zwischen den Teilkomponenten keine Nahtstellen oder Fügestellen vorhanden sind, welche sich negativ auf eine Stabilität der Laufradkomponente auswirken könnten.

Besonders bevorzugt sind die Hohlkammern der (wenigstens zwei) Teilkomponenten (wenigstens zum Teil) voneinander getrennt. Insbesondere weisen die getrennten Hohlkammern keine Verbindung auf. Vorzugsweise ist bzw. wird wenigstens (bereichsweise) eine Wandung zwischen den Hohlkammern ausgebildet. Vorteilhaft können die Teilkomponenten und insbesondere Hohlkammern dadurch separat und unabhängig voneinander insbesondere durch verschiedene Verfahren gefertigt und insbesondere geformt werden. Alternativ können zwei oder mehr Hohlkammern auch miteinander verbunden sein und eine zusammenhängende Hohlkammer bilden, welche sich durch mehrere Teilkomponenten erstreckt.

Wenigstens eine Teilkomponente (der wenigstens zwei Teilkomponenten) wird nach dem Spritzgussverfahren mit Fluidinjektion hergestellt und wenigstens eine andere, insbesondere weitere, Teilkomponente wird nach einem anderen, insbesondere weiteren, Verfahren hergestellt, welches auch ein Spritzgussverfahren ist und welches sich in wenigstens einem Verfahrensschritt von dem Spritzgussverfahren mit Fluidinjektion unterscheidet. Vorzugsweise wird bei dem anderen Verfahren kein Fluid zur Bildung einer Hohlkammer injiziert. Vorteilhaft werden so die Vorteile verschiedener Spritzgussverfahren für die Herstellung der Laufradkomponenten genutzt. Vorteilhaft sind auch diese wenigstens zwei Teilkomponenten einstückig miteinander verbunden.

Vorzugsweise wird eine Formkerneinrichtung mit wenigstens einem permanenten, insbesondere metallischen, Formkern, genutzt. Insbesondere umfasst die Formkerneinrichtung wenigstens einen stangenförmigen Formkern, welcher aus der erstarrten Teilkomponente herausziehbar ist. Vorteilhaft ist eine Formung einer Hohlkammer mit einer permanenten Formkerneinrichtung vorteilhaft für Hohlkammern mit geradem Verlauf und insbesondere konstantem Querschnitt nutzbar. Vorteilhaft können diese Verfahrensschritte mit dem Spritzgussverfahren mit Fluidinjektion verbunden werden. Vorzugsweise sind die durch die Formkerneinrichtung geformten Hohlkammern von den Hohlkammern, welche durch Fluidinjektion geformt sind, abgegrenzt und insbesondere getrennt. Vorteilhaft ist wenigstens eine Speiche einer Laufradkomponente durch das Verfahren herstellbar.

Vorzugsweise wird wenigstens eine andere, und insbesondere weitere, Teilkomponente aus einem Faserverbundwerkstoff hergestellt, welche wenigstens teilweise durch ein Spritzgussverfahren hergestellt ist, welches wenigstens die nachfolgenden Schritte umfasst:
- wenigstens ein Nabenkörper (Einlegeteil) wird an der Werkzeugeinrichtung, insbesondere an einer Aufnahmeeinrichtung, aufgenommen und zentriert, sodass der Nabenkörper wenigstens teilweise innerhalb einer anderen, und insbesondere weiteren, Kavität angeordnet ist;
- der wenigstens teilweise verflüssigte und insbesondere plastifizierte Faserverbundwerkstoff wird in die andere, und insbesondere weitere, Kavität der Werkzeugeinrichtung eingespritzt, sodass der Nabenkörper von dem Faserverbundwerkstoff (wenigstens teilweise) umspritzt, und insbesondere in die Teilkomponente eingegossen, wird.

Vorteilhaft kann so wenigstens der Nabenkörper (oder es können auch andere Einlegeteile) in die Teilkomponente integriert werden. Vorteilhaft kann der Nabenkörper bereits vor der Herstellung der Teilkomponente durch das Spritzgussverfahren vollständig maschinell bearbeitet worden sein. Dadurch können z. B. Funktionsflächen mit engen Toleranzen, wie z. B. Passungen, direkt bei der Herstellung in die Laufradkomponente integriert werden, ohne dass eine weitere maschinelle Nachbearbeitung notwendig ist. Insbesondere wird der Nabenkörper hierfür durch die Aufnahmeeinrichtung innerhalb der Kavität ausgerichtet und insbesondere zentriert. Vorteilhaft ist wenigstens eine als Nabe der Laufradkomponente ausgebildete Teilkomponente durch das andere Verfahren herstellbar.

Möglich ist es auch, dass zwei (oder mehr) Nabenkörperteile als Einlegeteile eingegossen werden. Beispielsweise können zwei oder mehr separate Nabenkörperteile definiert eingebracht werden.

Bevorzugt weist der Nabenkörper wenigstens ein Formelement auf, welches von dem Faserverbundwerkstoff wenigstens teilweise umschlossen wird. Vorteilhaft bildet das Formteil wenigstens einen Formschluss zwischen dem Nabenkörper und dem erstarrten Faserverbundwerkstoff. Vorteilhaft wird eine formschlüssige Kraftübertragung durch das Formelement gewährleistet. Vorzugsweise ist das Formelement als Einkerbung, Nut, Nase oder Flügel an dem Nabenkörper ausgebildet. Insbesondere erstreckt sich das Formelement wenigstens teilweise quer zu einer Kraftbelastungsrichtung des Nabenkörpers (Das bedeutet insbesondere, dass das Formelement den Nabenkörper lokal unrund ausgestaltet). Vorzugsweise ermöglicht das Formelement eine sichere Kraftübertragung zwischen dem Nabenkörper und dem Faserverbundwerkstoff, auch bei hohen Belastungen und insbesondere auch bei Wärmedehnungen.

Insbesondere ist der Nabenkörper aus einem Metall, wie Aluminium gefertigt oder umfasst wenigstens Aluminium. Zweckmäßig sind an dem Nabenkörper Lagersitze, vorzugsweise für Kugellager oder auch für Gleitlagerschalen, ausgebildet. Bevorzugt kann der Nabenkörper darüber hinaus auch weitere funktionale Elemente, wie eine Freilaufeinrichtung oder dergleichen, umfassen. Die Aufzählung ist hier nur beispielhaft und nicht abschließend.

Bevorzugt ist wenigstens eine Teilkomponente als Teilkomponente ausgebildet, welche aus einer Gruppe ausgewählt ist, welche wenigstens eine Speiche, wenigstens ein Felgensegment einer Felge, eine Felge und wenigstens eine Nabe eines Laufrads umfasst. Vorteilhaft kann eine solche Laufradkomponente als im Wesentlichen geschlossene und (lokal) rohrähnliche Hohlkörperstruktur ausgebildet sein, welche dadurch besonders stabil sowie leicht und prozesssicher in der Serienfertigung produzierbar ist.

Vorzugsweise umfasst ein Felgensegment zwei gegenüberliegende Felgenflanken mit einem Felgenbett und einem Felgenboden sowie vorzugsweise Felgenhörnern an den beiden Felgenflanken.

In einer zweckmäßigen Ausgestaltung ist die Laufradkomponente als Laufrad, z. B. als Vorderrad oder als Hinterrad ausgebildet. Das Laufrad weist eine Mehrzahl an Teilkomponenten auf. Die Teilkomponenten umfassen (wenigstens) eine umfänglich geschlossene Felge mit einer Mehrzahl an Felgensegmenten, und eine Mehrzahl an Speichen und insbesondere eine Nabe. Insbesondere ist wenigstens ein Felgensegment durch das Spritzgussverfahren mit Fluidinjektion hergestellt. Die anderen, und insbesondere weiteren, Teilkomponenten, d. h. die als Speichen ausgebildeten Teilkomponenten werden durch ein anderes (Spritzguss-)Verfahren gefertigt. Vorzugsweise umfasst das Laufrad zwischen drei und zehn Speichen. Besonders vorteilhaft sind die Hohlkammern der einzelnen Teilkomponenten voneinander getrennt, sodass eine besonders stabile Hohlkammerstruktur mit einer großen Anzahl an Verstrebungen gegeben ist. Besonders vorteilhaft weist das Laufrad dadurch eine hohe Belastbarkeit und ein geringes Gewicht auf. Das Laufrad kann prozesssicher in Serienfertigung hergestellt werden.

Insbesondere werden die Teilkomponenten beim Herstellungsprozess geformt und einstückig miteinander verbunden, sodass kein nachträglicher Zusammenbau mehrerer verschiedener Teilkomponenten notwendig ist. Gleichzeitig kann in der Nabe ein Nabenkörper aufgenommen oder vorgesehen sein, bei dem maschinell bearbeitete funktionale Flächen, wie Lagersitze, vorgesehen sind. Der Nabenkörper wird an entsprechenden Flächen zuvor passgenau bearbeitet. Z. B. wird ein Lagersitz entsprechend vorher bearbeitet.

Das erfindungsgemäße Verfahren dient zur Herstellung einer Laufradkomponente für wenigstens teilweise muskelbetriebene Fahrzeuge und insbesondere Fahrräder mit einer Mehrzahl von Teilkomponenten, die einstückig miteinander verbunden werden und die eine Felge und eine Mehrzahl von einstückig damit ausgebildeten Speichen bilden, wobei die Felge und die Speichen durch Spritzgießen aus wenigstens einem Faserverbundwerkstoff hergestellt werden. Das Verfahren umfasst wenigstens die nachfolgenden Verfahrensschritte:
- Einspritzen des wenigstens teilweise verflüssigten und insbesondere plastifizierten Faserverbundwerkstoffs in wenigstens eine Kavität einer Werkzeugeinrichtung;
- Injektion wenigstens eines Fluids in den wenigstens noch teilweise flüssigen Faserverbundwerkstoff innerhalb der Kavität zur Formung wenigstens einer Hohlkammer innerhalb der wenigstens teilweise erstarrten Teilkomponente, wodurch die Teilkomponenten der Felge gebildet werden.

Es wird wenigstens eine weitere Teilkomponente, welche wenigstens einen Teil einer Speiche bildet, mit folgenden Verfahrensschritten hergestellt:
- Innerhalb wenigstens einer weiteren Kavität der Werkzeugeinrichtung wird eine Formkerneinrichtung zur Formung wenigstens einer Hohlkammer innerhalb der weiteren Teilkomponente angeordnet.
- Der Faserverbundwerkstoff wird in die wenigstens eine weitere Kavität zur Bildung der anderen Teilkomponente eingespritzt.
- Die Formkerneinrichtung wird aus dem wenigstens teilweise erstarrten Faserverbundwerkstoff herausgezogen, um einen Hohlraum in der Speiche zu bilden.

Die Laufradkomponente wird mit der Felge und den einstückig damit verbundenen Speichen aus der Werkzeugeinrichtung entnommen.

Das erfindungsgemäße Verfahren hat viele Vorteile. Ein erheblicher Vorteil des erfindungsgemäßen Verfahrens ist, dass kein verlorener Formkern zur Formung der Hohlkammer notwendig ist, wodurch das Verfahren kostengünstig in Serienfertigung durchführbar ist. Vorteilhafte Weiterbildungen des Verfahrens ergeben sich aus der gesamten Anmeldung.

Bevorzugt wird das Fluid (insbesondere Wasser und zuvor etwas Gas) injiziert, wenn der Faserverbundwerkstoff wenigstens teilweise (direkt) an einer Wandung der Kavität erstarrt ist und eine Wandung der Teilkomponente bildet. Vorzugsweise ist der Faserverbundwerkstoff entlang eines wesentlichen Anteils der Wand erstarrt, bevor das Fluid injiziert wird. Vorteilhaft kann durch einen zeitlichen Versatz zwischen dem Einspritzen des Faserverbundwerkstoffs und dem Injizieren des Fluids eine Wandstärke der Teilkomponente eingestellt werden, sodass eine Wandung mit definierter Wandstärke herstellbar ist.

Zweckmäßig wird die Wandung der Kavität wenigstens teilweise gekühlt, vorzugsweise durch wenigstens eine Kühleinrichtung. Insbesondere kann dadurch eine Wandstärke der Wandung besonders genau eingestellt werden. Weiter kann eine Geschwindigkeit des Erstarrungsprozesses durch eine Kühlung durch wenigstens eine Kühleinrichtung beeinflusst und vorzugsweise beschleunigt werden.

Besonders bevorzugt wird die Kavität vor dem Injizieren des Fluids (quasi oder nahezu) vollständig mit dem Faserverbundwerkstoff gefüllt, sodass der flüssige Faserverbundwerkstoff wenigstens durch die Injektion des Fluids (wenigstens) teilweise aus der Kavität verdrängt wird. Insbesondere wird der verdrängte Faserverbundwerkstoff in (wenigstens) ein Überlaufvolumen, wie eine Überlaufkavität, verdrängt. Insbesondere ist die Kavität wenigstens zu 90%, 95%, 99% oder noch mehr mit Faserverbundwerkstoff gefüllt. Vorteilhaft ist wenigstens die Wandung der Kavität im Wesentlichen vollständig benetzt, bevor das Fluid injiziert wird. Vorteilhaft wird dadurch wenigstens gewährleistet, dass an jedem Ort in der Kavität ausreichend Faserverbundwerkstoff vorhanden ist, um eine durchgehende Wandung einer Teilkomponente zu formen. Weiter können Bauteilspannungen, insbesondere durch Schwindung, während des Erstarrungsprozesses durch den Volumenausgleich minimiert, und insbesondere verhindert, werden. Vorteilhaft kann der aus der Kavität verdrängte Faserverbundwerkstoff erneut verwendet werden.

Insbesondere kann ein Austritt des verdrängten Faserverbundwerkstoffs eine Ventileinrichtung mit wenigstens einem beweglichen Stellorgan, wie einem mechanischen Schieber, begrenzt werden, um den Herstellprozess optimal durchführen zu können. Vorzugsweise verhindert die Ventileinrichtung wenigstens während des Einspritzens des Faserverbundwerkstoffs wenigstens teilweise den Abfluss des Faserverbundwerkstoffs in das Überlaufvolumen.

Vorteilhaft wird die Kavität vor oder wenigstens während des Injizierens des Fluids wenigstens teilweise evakuiert. Vorteilhaft wird dadurch ermöglicht, dass keine (Gas-)Einschlüsse und Fehlstellen in den Teilkomponenten entstehen. Vorzugsweise kann die Kavität durch wenigstens eine Pumpe oder dergleichen evakuiert werden.

Zweckmäßig umfasst die Werkzeugeinrichtung wenigstens zwei Kavitäten zur Herstellung von zwei Teilkomponenten. Vorzugsweise sind die Kavitäten wenigstens teilweise miteinander verbunden. Zweckmäßig wird in jede Kavität (separat) Faserverbundwerkstoff eingespritzt, so dass sich der Faserverbundwerkstoff verbindet und eine einstückige Laufradkomponente aus den zwei oder mehr Teilkomponenten gebildet wird.

Insbesondere wird der Faserverbundwerkstoff in die einzelnen Kavitäten hierzu (nahezu) zeitgleich eingespritzt, wobei der Faserverbundwerkstoff in den einzelnen Kavitäten noch wenigstens teilweise flüssig ist, sodass dieser sich mit dem anderen Faserverbundwerkstoff (werkstoffeinstückig) verbinden kann. Besonders vorteilhaft ist hierdurch eine Laufradkomponente mit mehreren Teilkomponenten formbar, welche keine Übergangsstellen, Nähte oder Fügestellen aufweist. Insbesondere gehen die Teilkomponenten nahtlos ineinander über, sodass ein Kraftfluss zwischen den Teilkomponenten nicht (negativ) beeinflusst wird.

Vorzugsweise umfasst das Fluid wenigstens ein Gas oder auch ein Gasgemisch, wie insbesondere Luft oder ein Inertgas oder ein Edelgas. Vorteilhaft ist ein Gas oder ein Gasgemisch komprimierbar und kann Materialschwindungen beim Erstarren des Faserverbundwerkstoffs kompensieren. Zweckmäßig umfasst das Fluid wenigstens eine Flüssigkeit, insbesondere Wasser. Vorteilhaft haben Flüssigkeiten eine hohe Wärmekapazität, sodass der flüssige Faserverbundwerkstoff schneller gekühlt wird. Vorteilhaft kann das Fluid auch ein Gemisch aus wenigstens einem Gas und einer Flüssigkeit sein, wodurch sich deren Vorteile von Gasen und Flüssigkeiten wenigstens teilweise vereinen lassen.

In einer weiteren Ausgestaltung der Erfindung kann zusätzlich zu dem injizierten Fluid wenigstens ein Projektilelement vorhanden sein, welches wenigstens teilweise durch das Fluid durch die Kavität mit dem flüssigen Faserverbundwerkstoff gedrückt wird und die Hohlkammer so räumt. Vorteilhaft ist hierdurch eine Wandstärke sehr genau einstellbar, insbesondere bei großen Durchmessern der Hohlkammer.

Die erfindungsgemäße Vorrichtung mit einer Werkzeugeinrichtung dient zur Herstellung wenigstens einer Laufradkomponente für wenigstens teilweise muskelbetriebene Fahrzeuge und insbesondere Fahrräder. Die Werkzeugeinrichtung dient dazu, Laufradkomponenten herzustellen, die jeweils eine Mehrzahl von Teilkomponenten umfassen, wobei die Teilkomponenten einstückig miteinander verbunden sind. Die Teilkomponenten bilden eine Felge und eine Mehrzahl von einstückig damit ausgebildeten Speichen, wobei die Felge und die Speichen durch Spritzgießen von Faserverbundwerkstoff in der Werkzeugeinrichtung hergestellt werden. Die Werkzeugeinrichtung zur Ausbildung der Teilkomponenten der Felge und der Speichen umfasst wenigstens zwei Formeinrichtungen, welche wenigstens eine (offene oder geschlossene) Kavität zur Formung einer Mehrzahl von einstückig miteinander verbundenen Teilkomponenten der Laufradkomponente bilden. Zur Ausbildung wenigstens einer Teilkomponente der Felge ist wenigstens eine Einspritzöffnung zum Einspritzen eines wenigstens teilweise flüssigen Faserverbundwerkstoffs und wenigstens eine Injektionsdüse zur Injektion wenigstens eines Fluids innerhalb der (einen) Kavität zur Bildung wenigstens einer Hohlkammer innerhalb der Teilkomponente der Felge umfasst. Die Werkzeugeinrichtung umfasst wenigstens eine weitere Kavität, welche mit der Kavität mit der Einspritzöffnung verbunden ist. Die Werkzeugeinrichtung umfasst eine Mehrzahl von Formkerneinrichtungen, welche zur Formung von Hohlkammern in den Speichen als Teilkomponenten jeweils in die weiteren Kavitäten einfahrbar und wieder ausfahrbar sind.

Auch die erfindungsgemäße Vorrichtung und die Werkzeugeinrichtung haben viele Vorteile. Ein erheblicher Vorteil der Werkzeugeinrichtung ist, dass eine Formung einer Teilkomponente mit wenigstens einer im Wesentlichen geschlossenen Hohlkammer kostengünstig und prozesssicher in Serienfertigung ermöglicht wird. Vorteilhafte Weiterbildungen der Werkzeugeinrichtung ergeben sich aus der gesamten Anmeldung.

Zweckmäßig weisen die Formeinrichtungen korrespondierende Ausrichteinheiten auf, durch welche die Formeinrichtung zueinander ausrichtbar sind, um eine definierte Geometrie, und insbesondere Außenkontur, der Teilkomponenten zu ermöglichen.

Vorteilhaft wird wenigstens eine Spritzgießeinrichtung mit wenigstens einer Heizeinrichtung wenigstens zur Erwärmung und Verflüssigung des, insbesondere granulatförmigen, Faserverbundwerkstoffs und wenigstens einer Fördereinrichtung zum Einspritzen des wenigstens teilweise flüssigen Faserverbundwerkstoffs in die Kavität der Werkzeugeinrichtung genutzt. Insbesondere ist wenigstens eine Plastifiziereinheit umfasst.

Vorzugsweise erfolgt das Einspritzen des Faserverbundwerkstoffs wenigstens teilweise durch eine Fördereinrichtung, wie eine Förderschneckeneinrichtung, eine (Druck-)Pumpe und/oder durch Schwerkraft.

Vorteilhaft umfasst die Werkzeugeinrichtung wenigstens eine Kühleinrichtung, wie einen Wassermantel, zur Kühlung der Formeinrichtungen und zur Steuerung des Erstarrungsprozesses des Faserverbundwerkstoffs.

Insbesondere umfasst die Werkzeugeinrichtung wenigstens eine Auslassdüse, welche an der Kavität angeordnet ist und durch welche das injizierte Fluid wieder nach außen aus der Hohlkammer heraustreten kann.

Bevorzugt umfasst die Werkzeugeinrichtung wenigstens eine weitere Kavität, welche mit der Kavität mit der Einspritzöffnung verbunden ist. Insbesondere ist wenigstens eine Formkerneinrichtung umfasst, welche (wenigstens teilweise) innerhalb einer der weiteren Kavität zur Formung einer Hohlkammer anordnenbar ist. Zweckmäßig ist die Formkerneinrichtung wenigstens teilweise in die zweite Kavität zur Bildung einer zweiten, und insbesondere zu der ersten Hohlkammer separaten, Hohlkammer einführbar. Alternativ oder zusätzlich ist wenigstens eine Aufnahmeeinrichtung zur Anordnung, und insbesondere zur Zentrierung, wenigstens eines (separaten) Nabenkörpers oder anderen Einlegeteils wenigstens teilweise innerhalb der weiteren Kavität umfasst. Vorteilhaft ist der Nabenkörper zum Eingießen in die dritte Kavität aufnehmbar. Vorteilhaft können dadurch verschiedene Spritzgussverfahren mit einer Werkzeugeinrichtung insbesondere zeitgleich zur Herstellung einer einstückigen Laufradkomponente durchgeführt werden.

Insbesondere umfasst die Werkzeugeinrichtung wenigstens zwei und bevorzugt wenigstens vier und besonders bevorzugt wenigstens fünf, insbesondere (nahezu) gleiche, Werkzeugsegmente. Jedes Werkzeugsegment umfasst jeweils wenigstens eine Kavität mit wenigstens einer Spritzgusseinrichtung mit wenigstens einer Injektionsdüse. "Nahezu gleich" heißt insbesondere, dass die Werkzeugsegmente abgesehen von z. B. der Ausbildung eines Ventildurchgangs oder einer Aufnahme für einen Felgenmagnet (oder ähnlicher kleiner Abweichungen) gleich oder teilweise identisch sind. Regelmäßig ist ja z.B. an genau einem Segment die Ausbildung des Ventildurchgangs vorgesehen.

Vorzugsweise umfasst die Werkzeugeinrichtung wenigstens ein Überlaufvolumen, wie eine Überlaufkavität. Zweckmäßig kann aus der Kavität verdrängter Faserverbundwerkstoff in das Überlaufvolumen abgeführt werden, insbesondere bei der Bildung einer Hohlkammer durch Injektion des Fluids. Zweckmäßig umfasst jedes Werkzeugsegment ein separates Überlaufvolumen. Vorteilhaft ermöglicht das Überlaufvolumen an jedem Werkzeugsegment einen kurzen Weg zum Ausgleich des Faserverbundwerkstoffs, sodass die Wahrscheinlichkeit von Materialdefekten durch Schwindung des Faserverbundwerkstoffs beim Erstarren des Faserverbundwerkstoffs reduziert und insbesondere minimiert werden.

Alternativ kann das Aufnahmevolumen auch durch die Spritzgusseinrichtung selbst gebildet werden, sodass der verdrängte flüssige Faserverbundwerkstoff in die Spritzgusseinrichtung zurückgedrückt wird.

In einer bevorzugten Weiterbildung umfasst jedes Werkzeugsegment der Werkzeugeinrichtung wenigstens eine Einspritzöffnung zum Einspritzen eines wenigstens teilweise flüssigen Faserverbundwerkstoffs und wenigstens eine zugeordnete Injektionsdüse zur Injektion wenigstens eines Fluids zur Ausbildung von Hohlkammern in den Felgensegmenten und jeweils eine gesteuert verfahrbare Formkerneinrichtung zur jeweiligen Ausbildung einer Hohlkammer in einer Speiche.

Weitere Vorteile und Merkmale der vorliegenden Erfindung ergeben sich aus dem Ausführungsbeispiel, welches im Folgenden mit Bezug auf die beiliegenden Figuren erläutert wird.

In den Figuren zeigen:
- Figur 1: eine rein schematische Darstellung eines Mountainbikes mit erfindungsgemäßen Laufradkomponenten, welche als Laufräder ausgebildet sind;
- Figur 2: eine rein schematische Darstellung eines Rennrades mit erfindungsgemäßen Laufradkomponenten, welche als Laufrad ausgebildet sind;
- Figur 3: eine rein schematische perspektivische Ansicht einer erfindungsgemäßen Laufradkomponente, welche als Laufrad für ein Fahrrad ausgebildet ist;
- Figur 4: eine rein schematische Detaildarstellung eines vergrößerten Teils des Felgenbereichs der als Laufrad ausgebildeten erfindungsgemäßen Laufradkomponente;
- Figur 5a: eine rein schematische Schnittdarstellung eines Felgensegments der als Laufrad ausgebildeten erfindungsgemäßen Laufradkomponente;
- Figur 5b: eine rein schematische perspektivische Ansicht eines Teils einer erfindungsgemäßen Laufradkomponente;
- Figur 6: eine rein schematische Detaildarstellung eines vergrößerten Teils um die Nabe der als Laufrad ausgebildeten erfindungsgemäßen Laufradkomponente;
- Figur 7: eine rein schematische perspektivische Ansicht eines als Nabenkörper ausgebildeten Einlegeteils zum Eingießen in eine der Teilkomponenten;
- Figur 8: eine rein schematische Ansicht einer erfindungsgemäßen Werkzeugeinrichtung zur Herstellung der als Laufrad ausgebildeten erfindungsgemäßen Laufradkomponente;
- Figur 9: rein schematische Darstellungen zur Veranschaulichung der Funktion der Werkzeugeinrichtung und des Verfahrens zur Herstellung der als Laufrad ausgebildeten erfindungsgemäßen Laufradkomponente;
- Figur 10: rein schematische Darstellungen des Spritzgussverfahrens mit Fluidinjektion zur Herstellung einer als Felgensegment ausgebildeten Teilkomponente der als Laufrad ausgebildeten Laufradkomponente.

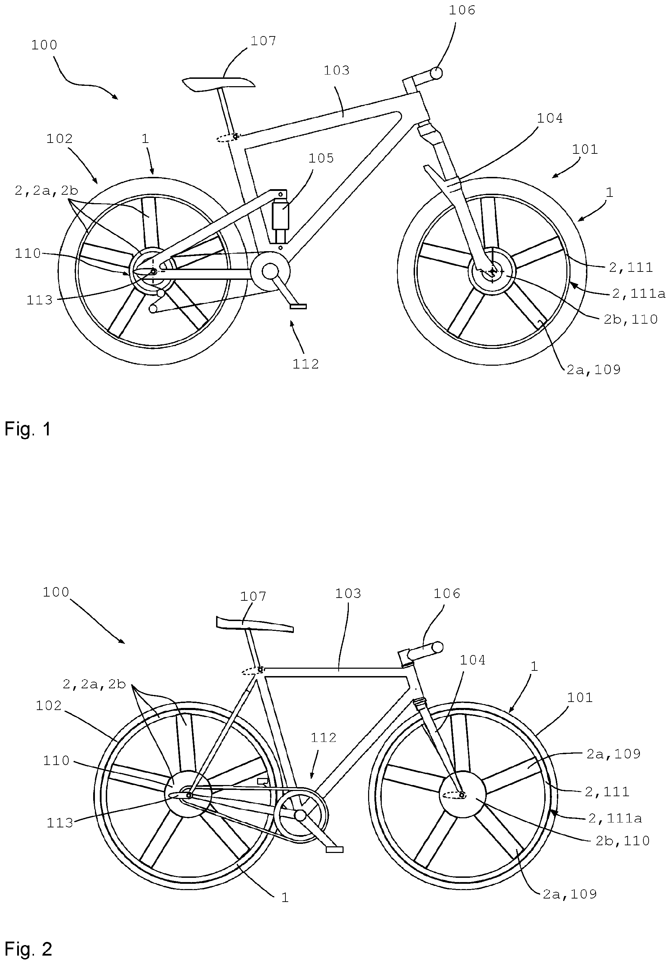

In den Figuren 1 und 2 sind jeweils ein Mountainbike bzw. ein Rennrad 100 dargestellt, die jeweils mit erfindungsgemäßen Laufradkomponenten 1 ausgerüstet sind. Das Mountainbike bzw. Rennrad 100 verfügt jeweils über ein Vorderrad 101 und ein Hinterrad 102, welche jeweils als erfindungsgemäße Laufradkomponenten 1 ausgebildet sind. Die beiden Laufräder 101, 102 verfügen über Speichen 109, um die mehrere Felgensegmente 111 umfassende Felge 111a mit den Naben 110 zu verbinden.

Die Laufradkomponenten 1 umfassen Teilkomponenten 2, 2a und 2b. Die Teilkomponenten 2 sind Felgensegmente 111 der Felge 111a und die Teilkomponenten 2a bilden die Speichen 109, welche die zentrale Teilkomponenten 2c (Zentralkomponente) einstückig mit der Felge 111a verbinden.

Ein Rad 100 verfügt über einen Rahmen 103, einen Lenker 106, einen Sattel 107, eine Gabel bzw. Federgabel 104 und im Falle des Mountainbikes kann ein Hinterraddämpfer 105 vorgesehen sein. Zum Antrieb dient eine Tretkurbel 112 mit Pedalen. Gegebenenfalls kann ein elektrischer Hilfsantrieb an der Tretkurbel 112 und oder den Rädern 101,102 vorgesehen sein. Die Nabe 110 der Räder kann jeweils über ein Spannsystem 113 (zum Beispiel eine Steckachse oder einen Schnellspanner) an dem Rahmen 103 befestigt sein.

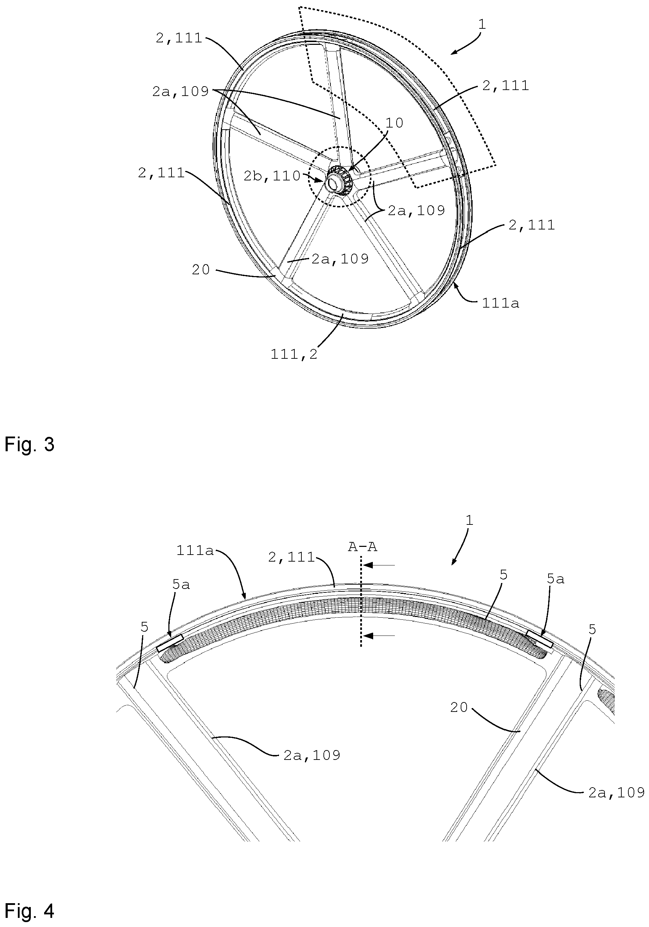

Figur 3 zeigt eine rein schematische perspektivische Ansicht einer erfindungsgemäßen Laufradkomponente 1, welche als Laufrad 101, 102 eines Fahrrads 100 ausgebildet ist. Die Laufradkomponente 1 umfasst mehrere Teilkomponenten 2, 2a, 2b welche alle durch Spritzgussverfahren hergestellt sind. Die Felge 111a umfasst fünf Felgensegmente 111. Jedes Felgensegment 111 wird hier durch eine Teilkomponente 2 gebildet. Alle Felgensegmente 111 sind durch ein Spritzgussverfahren mit Fluidinjektion hergestellt. Die Speichen 109 und die Nabe 110 bilden Teilkomponenten 2a, 2b, welche auch durch Spritzgussverfahren hergestellt sind, die sich von dem Spritzgussverfahren mit Fluidinjektion unterscheiden. Die Nabe 110 umfasst hier weiter ein als Nabenkörper 10 ausgebildetes Einlegeteil, welches bei der Herstellung mit eingegossen wird.

In allen Ausgestaltungen wird die Laufradkomponente 1 und es werden insbesondere die Teilkomponenten 2 (Felgensegmente 111), die Teilkomponenten 2a (Speichen 109) und die zentrale Teilkomponente 2c mit dem eingegossenen Nabenkörper 10 quasi gleichzeitig hergestellt. "Quasi gleichzeitig" heißt, dass diese Teilkomponenten vorzugsweise alle (in einem Verfahrensgang) hergestellt werden, während und solange sich alle Teilkomponenten in einer (gemeinsamen) Werkzeugeinrichtung befinden. Das bedeutet, dass die Teilkomponenten einstückig innerhalb der Werkzeugeinrichtung ausgebildet werden. Es werden nicht separate Teile produziert, die aus der Produktion entnommen und danach miteinander verbunden werden.

Figur 4 zeigt eine rein schematische Detaildarstellung eines vergrößerten Teils des Felgenbereichs 111a der als Laufrad 100 ausgebildeten erfindungsgemäßen Laufradkomponente 1. Das hier dargestellte Felgensegment 111a erstreckt sich zwischen zwei Speichen 109.

Die als Felgensegment 111 ausgebildete Teilkomponente 2 ist nach dem Spritzgussverfahren mit Fluidinjektion hergestellt und weist daher eine durch Injektion eines Fluids 4 geformte Hohlkammer 5 auf, welche sich hier entlang der Umfangsrichtung der Felge 111a erstreckt. Das Felgensegment 111 bzw. die Teilkomponente 2 kann auch als Umfangskomponente bezeichnet werden. Durch das Herstellungsverfahren bedingt weist die Hohlkammer 5 zwei die Wandung 7 durchgreifende Öffnungen 5a auf, für den Eintritt und den Austritt des injizierten Fluids 4. Die Öffnungen 5a können hier durch nicht dargestellte Stopfen oder Abdeckkappen luftdicht verschlossen werden, sodass auch schlauchlose Reifen in Verbindung mit der erfindungsgemäßen Laufradkomponente 1 nutzbar sind.

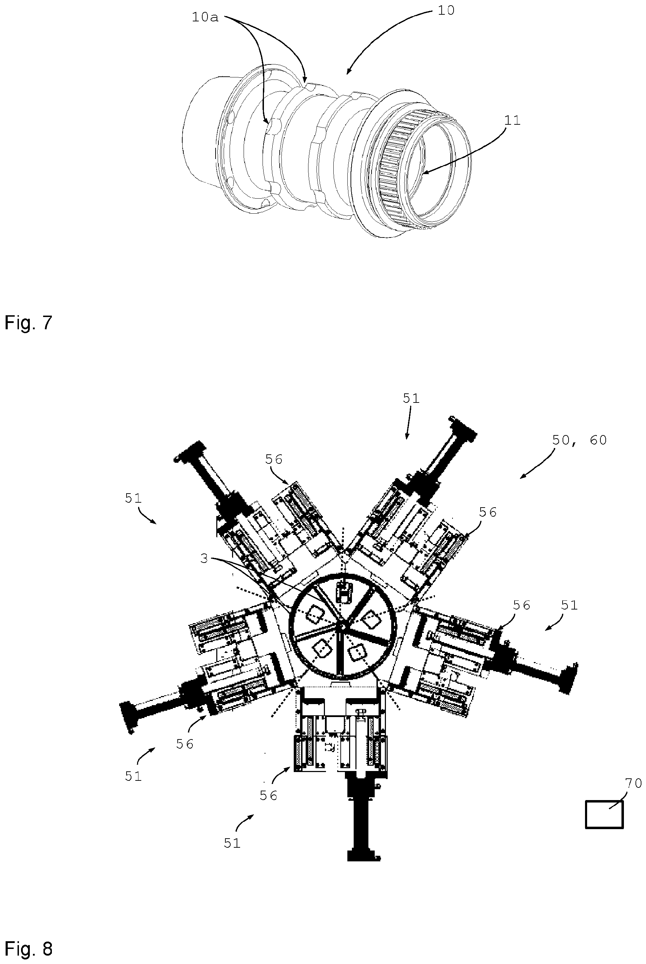

Die Speichen 109 als Teilkomponenten 2a weisen ebenfalls Hohlkammern 5 auf, welche hier jeweils durch eine Formkerneinrichtung 52 geformt werden. Die Hohlkammern 5 der Teilkomponenten 2a sind jeweils voneinander durch eine Wandung 7 getrennt und nicht verbunden, d. h., dass zwischen den Hohlkammern 5 keine durchgehende Verbindung besteht. Jede Formkerneinrichtung 52 (Fig. 8) wird vor dem Einspritzen von Faserverbundwerkstoff eingefahren und nach Verfestigung wieder ausgefahren.

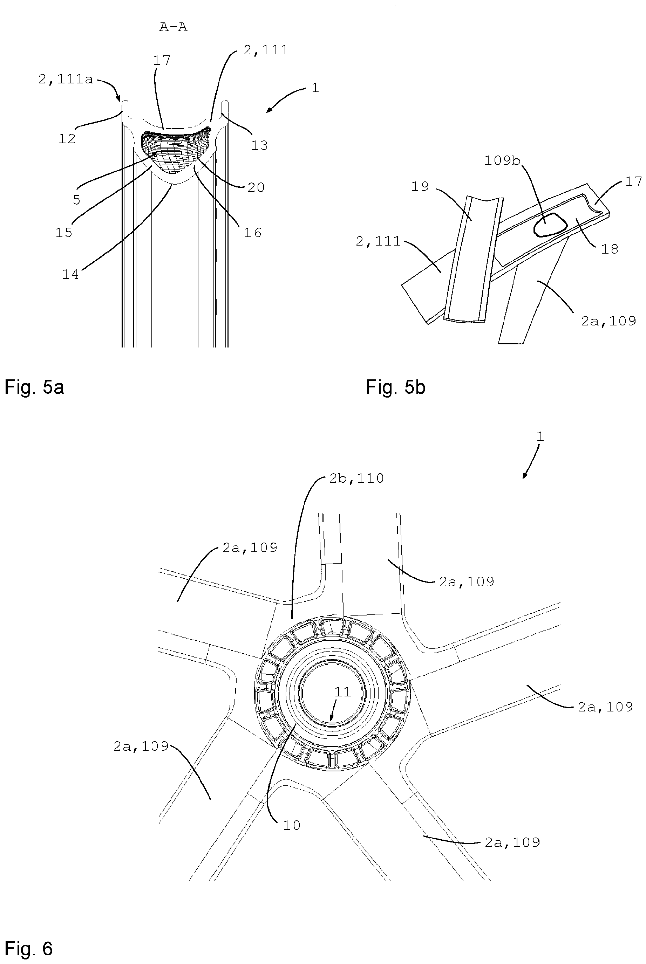

Figur 5a zeigt eine rein schematische Schnittdarstellung eines vergrößerten Teils des Felgensegments 111 der als Laufrad 101,102 ausgebildeten erfindungsgemäßen Laufradkomponente 1. Hier ist ein Schnitt durch eine Teilkomponente 2 dargestellt, welche als Felgensegment 111 der Felge 111a ausgebildet ist, siehe Figur 4.

Das Felgensegment 111 umfasst zwei Felgenhörner 12, 13, ein Felgenbett 17, einen Felgenboden 14 und zwei Felgenflanken 15, 16. Zwischen dem Felgenboden 14, dem Felgenbett 17 und den Felgenflanken 15, 16 ist der Hohlraum 5 ausgebildet, welcher durch das Spritzgussverfahren mit Fluidinjektion hergestellt ist und welcher sich in die Zeichenebene entlang des Felgensegments 111 krümmt.

Figur 5b zeigt eine rein schematische perspektivische Ansicht auf einen Teil der Laufradkomponente 1, wobei ein Felgensegment 111 als Teilkomponente 2 und eine Speiche 109 als Teilkomponente 2a sichtbar sind. Die Speiche 109 ist hohl ausgebildet und umfasst eine Hohlkammer 5 bzw. einen Hohlraum 109b in der Speiche 109. Die Teilkomponente 2 kann auch als Umfangskomponente und die Teilkomponente 2a kann auch als Radialkomponente bezeichnet werden. Die Hohlkammer 5 der Speiche 109 mündet an dem Felgenbett 17. Dort ist an der Teilkomponente 2 eine Aufnahmevertiefung 18 ausgebildet, die direkt bei dem Herstellverfahren (möglichst) passgenau ausgebildet wird. Nach der Entnahme der Laufradkomponente 1 aus dem Werkzeug wird eine passend hergestellte Abdeckkappe 19 aufgebracht und insbesondere aufgeklebt. Die Abdeckkappe 19 dichtet die Aufnahmevertiefung 18 und den Speichenhohlraum 109b (luftdicht) ab. Die Oberfläche der Abdeckkappe 19 bildet einen Teil des Felgenbettes 17.

Figur 6 zeigt eine rein schematische Detaildarstellung eines vergrößerten Teils um die Nabe 110 der als Laufrad 101, 102 ausgebildeten erfindungsgemäßen Laufradkomponente 1. Die insgesamt fünf Speichen 109 erstrecken sich von der Nabe 110 radial (und linear gestreckt) nach außen. In die Nabe 110 ist ein Nabenkörper 10 eingegossen. Der Nabenkörper 10 ist aus leichtem Aluminium gefertigt, in welchem Lagersitze 11 durch maschinelle spangebende Bearbeitung ausgebildet sind. Dadurch können Kugellager nach der Fertigung der Laufradkomponente 1 direkt eingesetzt werden. Eine nachträgliche spangebende Bearbeitung der Laufradkomponente 1 nach der Herstellung durch die Spritzgussverfahren ist nicht notwendig. Regelmäßig müssen nachträglich Überlaufkavitäten und z.B. Angüsse entfernt werden. Ggf. auch Schwimmhäute. In der Regel begrenzt sich die Nacharbeit auf die Bearbeitung der Anschlussstellen wie Angüssen und Überlaufkavitäten.

Die Teilkomponenten 2, 2a, 2b sind alle jeweils durch ein Spritzgussverfahren hergestellt. Die Teilkomponenten 2, 2a sind einstückig miteinander verbunden und verfügen über ein homogenes Materialgefüge und weisen keine Naht- oder Übergangsstellen auf.

In allen Ausgestaltungen und Ausführungen kann durch Schnittuntersuchungen festgestellt werden, dass die Hohlräume 109b in den Speichen 109 durch (glatte) Formkerneinrichtungen 52 gebildet oder ausgeformt wurden, die vor dem Spritzgießen eingeführt und danach herausgezogen bzw. entfernt wurden. Die innere Oberfläche ist (nahezu perfekt oder perfekt) symmetrisch ausgebildet und ändert sich über wesentliche Längenabschnitte nicht. Die Innenoberflächen der Teilkomponenten 2 (Felgensegmente 111) weisen erheblich größere Oberflächenschwankungen auf, denn dort wird durch das eingespritzte Fluid regelmäßig nicht überall eine perfekt glatte und symmetrische Oberfläche erzeugt, auch wenn die Oberflächenqualität auf der Innenseite gut ist und die Wandstärkenkonstanz den Anforderungen gerecht wird. Insofern gibt es messbare Unterschiede in unterschiedlichen Teilkomponenten 2, 2a, welche die Art des (lokalen) Herstellverfahrens bestimmen lassen.

Figur 7 zeigt eine rein schematische perspektivische Ansicht eines Nabenkörpers 10 zum Eingießen in eine nach einem anderen Spritzgussverfahren als dem Spritzgussverfahren mit Fluidinjektion hergestellten Teilkomponente 2a, siehe Figur 6. Das Nabenkörper 10 weist hier an der Außenseite als Nuten bzw. Einkerbungen 10a ausgebildete Formteile 10a auf. Diese Formteile 10a werden beim Spritzgussverfahren von dem flüssigen Faserverbundwerkstoff 20 umschlossen und bilden einen Formschluss, d. h. eine formschlüssige Verbindung. Dadurch wird eine funktionssichere Kraftübertragung zwischen dem Nabenkörper 10 und dem Faserverbundwerkstoff 20 gewährleistet, insbesondere bei hohen Drehmomenten bzw. einer hohen zu übertragenden Kraft und unabhängig von Volumenschwindungen beim Erstarren des Faserverbundwerkstoffs 20 oder auch Wärmedehnungen.

Figur 8 zeigt eine rein schematische Ansicht einer erfindungsgemäßen Vorrichtung 60 mit einer Werkzeugeinrichtung 50 zur Herstellung einer als Laufrad 101, 102 ausgebildeten erfindungsgemäßen Laufradkomponente 1. Im inneren Bereich der Werkzeugeinrichtung 50 ist eine Mehrzahl an Kavitäten 3 vorhanden, welche miteinander verbunden sind. In jeder Kavität 3 wird eine Teilkomponente 2, 2a durch ein Spritzgussverfahren hergestellt. Dadurch sind die Teilkomponenten 2, 2a einstückig (und insbesondere stoffschlüssig und werkstoffeinstückig) miteinander verbunden. Die Vorrichtung 60 umfasst eine Werkzeugeinrichtung 50 und in bevorzugten Ausgestaltungen besteht die Vorrichtung 60 aus einer Werkzeugeinrichtung 50. Gegebenenfalls sind noch eine (gegebenenfalls separate) Steuereinrichtung 70 und weitere Aggregate vorgesehen.

Die Werkzeugeinrichtung 50 ist in fünf gleiche Werkzeugsegmente 51 unterteilt. Jedes Werkzeugsegment 51 umfasst eine Spritzgusseinrichtung 56, durch welche der wenigstens teilweise flüssige Faserverbundwerkstoff 20 wenigstens in die dem Werkzeugsegment 51 zugeordneten Kavitäten 3 der Werkzeugeinrichtung 50 einspritzbar ist. Die Anzahl der Werkzeugsegmente 51 entspricht hier der Anzahl der Speichen 109 der als Laufrad 101, 102 ausgebildeten Laufradkomponente 1. Weiter umfasst die Spritzgusseinrichtung 56 weitere Elemente, wie ein Aufnahmevolumen 8, die hier nicht im Detail dargestellt sind.

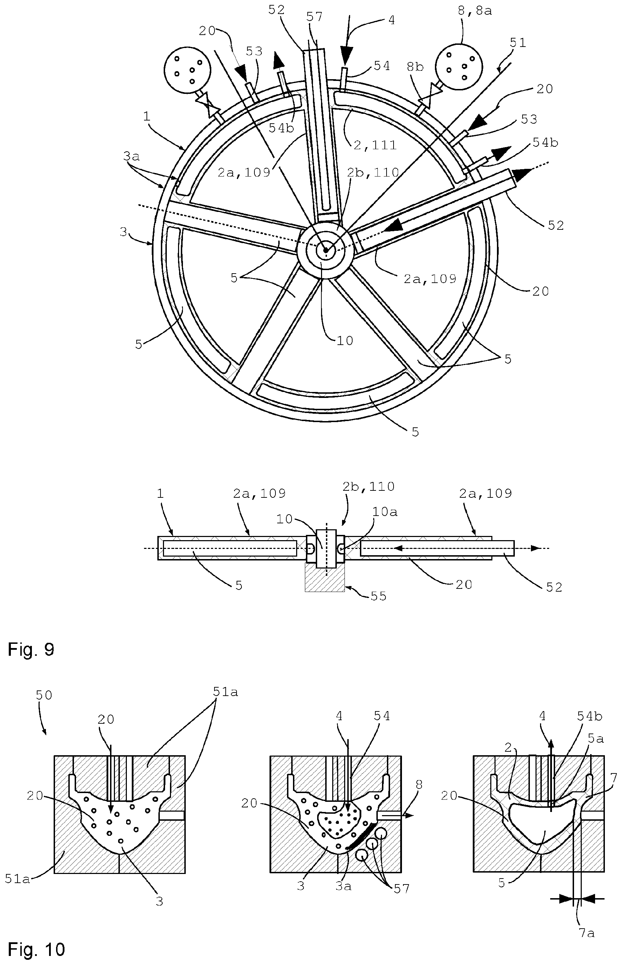

Figur 9 zeigt rein schematische Darstellungen zur Visualisierung des Verfahrens und insbesondere der Funktion der Spritzgusseinrichtung 56 zur Herstellung einer als Laufrad 101, 102 ausgebildeten erfindungsgemäßen Laufradkomponente 1. Die Bestandteile des Werkzeugsegments 51 sind dabei für eines der insgesamt fünf gleichen Werkzeugsegmente 51 im Detail dargestellt.

Die als Laufrad 101, 102 ausgebildete Laufradkomponente 1 umfasst hier Teilkomponenten 2, welche durch das Spritzgussverfahren mit Fluidinjektion hergestellt werden und weitere Teilekomponenten 2a, welche durch Spritzgussverfahren hergestellt werden, bei denen kein Fluid 4 injiziert wird, und sich daher in wenigstens in einem Verfahrensschritt von dem Spritzgussverfahren mit Fluidinjektion unterscheiden.

Die Felgensegmente 111 werden durch Teilkomponenten 2 gebildet, welche durch das Spritzgussverfahren mit Fluidinjektion hergestellt ist. Die Speichen 109 werden hier durch anderen Teilkomponenten 2a gebildet, welche durch ein Spritzgussverfahren hegestellt sind, bei dem eine Formkerneinrichtung 52 in die Kavität 3 zur Bildung einer Hohlkammer 5 eingeführt wird. Die als Nabe 110 ausgeführte Teilkomponente 2a umfasst hier das als Nabenkörper 10 ausgebildete Einlegeteil, welches eingegossen ist.

Zur Herstellung der als Laufrad 101, 102 ausgebildeten Laufradkomponente 1 sind die Kavitäten 3 so ausgebildet, dass die Wandungen 3a aller Kavitäten 3 einer Außenoberfläche der Laufradkomponente 1 entspricht. Die Kavitäten 3 sind untereinander verbunden, sodass die Teilkomponenten 2, 2a und auch die resultierende Laufradkomponente 1 einstückig ausgebildet sind.

Zur Herstellung der Laufradkomponente 1 wird zunächst eine Formkerneinrichtung 52 in die Kavität 3 eingeführt, welche eine als Speiche 109 ausgebildete Teilkomponente 2a bildet. Die Geometrie der Formkerneinrichtung 52 bestimmt die Form der Hohlkammer 5 innerhalb der als Speiche 109 ausgebildeten Teilkomponente 2a. Hier ist die Formkerneinrichtung 52 als Schieber ausgeführt, welcher in die Kavität 3 eingefahren wird. Der Schieber weist einen solchen (z. B. runden) Querschnitt auf, dass der Schieber (problemlos) wieder ausgefahren werden kann.

Hier weist der Schieber vorzugsweise einen ovalen oder runden Querschnitt auf. Der Querschnitt kann aber auch unrund oder sternförmig ausgebildet sein. Regelmäßig wird der Schieber (nur) linear verfahren. Denkbar ist aber neben einer linearen Bewegung auch eine Drehbewegung, sodass z.B. ein schraubenförmiger Hohlraum entsteht.

Der Nabenkörper 10 wird durch eine Aufnahmeeinrichtung 55 zentriert aufgenommen und innerhalb einer der Kavitäten 3 ausgerichtet.

Die Kavitäten 3 werden durch eine nicht dargestellte Pumpe durch die Auslassdüse 54b evakuiert. Während des Evakuierens wird hier der wenigstens teilweise verflüssigte Faserverbundwerkstoff 20 durch die insgesamt fünf Einspritzöffnungen 53 der Werkzeugeinrichtung 5 eingespritzt. Der Faserverbundwerkstoff 20 füllt die Kavitäten 3. Alle Kavitäten 3 werden vollständig mit Faserverbundwerkstoff 20 gefüllt. Wenn der Faserverbundwerkstoff 20 wenigstens teilweise an der Wandung 3a der Kavität 3 erstarrt ist, wird in die Felgensegmente 111 durch die Injektionsdüsen 54 ein Fluid 4 zur Formung der Hohlkammer 5 injiziert.

Aufgrund der hohen Wärmekapazität wird hier Wasser als Fluid 4 genutzt. Das Fluid 4 verdrängt den Faserverbundwerkstoff 20 hier in die Überlaufvolumen 8, welches hier jeweils als Überlaufkavität 8a, ausgebildet sind. Die Überlaufkavitäten 8a können hier jeweils durch eine als Stellorgan 8b ausgebildete Ventileinrichtung 8b, welche einen mechanischen Schieber umfasst, adaptiv zugeschaltet werden. Alternativ kann der verdrängte Faserverbundwerkstoff 20 auch in die Einspritzöffnung 53 verdrängt und insbesondere zurückgedrückt werden. Zusätzlich können hier die Wände 3a der Kavitäten 3 durch eine Kühleinrichtungen 57 in Form (z.B.) eines Wassermantels mit Wasserrohren gekühlt werden, um den Erstarrungsprozess zu steuern und zu beschleunigen. Hier ist beispielhaft ein Wassermantel einer Kühleinrichtung 57, welcher mehrere Kühlrohre umfasst, ausgebildet, welche innerhalb der Formkerneinrichtung 52 angeordnet ist.

Der Nabenkörper 10 wird von dem Faserverbundwerkstoff 20 umschlossen, durch die Formelemente 10a wird ein Formschluss zwischen dem Nabenkörper 10 und dem Faserverbundwerkstoff 20 hergestellt.

Nach dem Erstarren sind die einzelnen Teilkomponenten 2, 2a einstückig verbunden. Dabei sind die durch Fluidinjektion und die Formkerneinrichtung 52 hergestellten Hohlkammern 5 voneinander getrennt. Die fertige Laufradkomponente 1 kann entnommen werden und ohne weitere Nachbearbeitungsschritte oder weiteren Fertigungsschritte zur Montage vorbereitet werden, in dem hier zum Beispiel die Lager in die Lagersitze 11 eingesetzt werden.

Figur 10 zeigt rein schematische Darstellungen des Spritzgussverfahrens mit Fluidinjektion zur Herstellung einer als Felgensegment 111 ausgebildeten Teilkomponente 2 der als Laufrad 101, 102 ausgebildeten Laufradkomponente 1. Der Verfahrensablauf ist hier von links nach rechts dargestellt. Im ersten Schritt des Verfahrens wird in die Kavität 3 der wenigstens teilweise flüssige Faserverbundwerkstoff 20 eingespritzt und die Kavität 3 vollständig gefüllt. Die Kavität 3 wird durch mehrere Formeinrichtungen 51a der Werkzeugeinrichtung 50 gebildet.

Wenn der Faserverbundwerkstoff 20 an der Wandung 3a der Kavität 3 wenigstens teilweise erstarrt ist, wird das Fluid 4 zur Formung der Hohlkammer 5 injiziert. Der Erstarrungsprozess wird hier durch eine als Wassermantel ausgebildete Kühleinrichtung 57 unterstützt. Durch die Injektion des Fluids 4 wird ein Teil des noch flüssigen Faserverbundwerkstoffs 20 in das Überlaufvolumen 8 verdrängt. Das Fluid 4 formt die Hohlkammer 5, welche in der erstarrten Teilkomponente 2 vorhanden ist.

Die Wandung 7 weist hier eine gleichmäßige und dünne Wandstärke 7a auf, welche hier durch die gezielte Nutzung der Kühleinrichtung 57 einstellbar ist. Bei der Formung der Hohlkammer 5 wird das injizierte Fluid 4 wenigstens teilweise durch die Öffnung 5a in der Hohlkammer 5 wieder nach außen gedrückt. Die Injektionsdüse 54 und die Auslassdüse 54b werden hier in der Figur durch die gleiche Öffnung repräsentiert.

### Bezugszeichenliste:

| | | | |
|---|---|---|---|
| 1 | Laufradkomponente | 51a | Formeinrichtung |
| 2 | Teilkomponente, Umfangskomponente | 52 | Formkerneinrichtung |
| | | 53 | Einspritzöffnung |
| 2a | andere, weitere Teilkomponente, Radialkomponente | 54 | Injektionsdüse |
| | | 54b | Auslassdüse |
| | | 55 | Aufnahmeeinrichtung |
| 2b | zentrale Teilkomponente, Zentralkomponente | 56 | Spritgusseinrichtung |
| | | 57 | Kühleinrichtung |
| 3 | Kavität | 60 | Vorrichtung |
| 3a | Wandung von 3 | 70 | Steuereinrichtung |
| 4 | Fluid | 100 | Fahrrad |
| 5 | Hohlkammer | 101 | Laufrad, Vorderrad |
| 5a | Öffnung | 102 | Laufrad, Hinterrad |
| 7 | Wandung von 2 | 103 | Rahmen |
| 7a | Wandstärke von 7 | 104 | Gabel, Federgabel |
| 8 | Aufnahmevolumen | 105 | Hinterraddämpfer |
| 8a | Überlaufkavität | 106 | Lenker |
| 8b | Ventileinrichtung, Stellorgan | 107 | Sattel |
| | | 109 | Speiche |
| 10 | Nabenkörper, Einlegeteil | 109b | Hohlraum in der Speiche, Speichenhohlraum |
| 10a | Formelement | | |
| 11 | Lagersitz | 110 | Nabe |
| 12,13 | Felgenhorn | 111 | Felgensegment |
| 14 | Felgenboden | 111a | Felge |
| 15,16 | Felgenflanke | 111b | Segmenthohlkammer, Hohlkammer in dem Felgensegment |
| 17 | Felgenbett | | |
| 18 | Aufnahmevertiefung | | |
| 19 | Abdeckkappe | 112 | Tretkurbel |
| 20 | Faserverbundwerkstoff | 113 | Spannsystem |
| 50 | Werkzeugeinrichtung | | |
| 51 | Werkzeugsegment | | |

## Patentansprüche

1. Laufradkomponente (1) für ein wenigstens teilweise muskelbetriebenes Fahrzeug, insbesondere ein Fahrrad (100), umfassend eine Mehrzahl von Teilkomponenten (2, 2a, 2b), die einstückig miteinander verbunden sind und die eine Felge (111) und eine Mehrzahl von einstückig damit ausgebildeten Speichen (109) bilden, wobei die Felge (111) und die Speichen (109) durch Spritzgießen von Faserverbundwerkstoff (20) hergestellt sind,
wobei die Teilkomponenten (2) der Felge (111) wenigstens teilweise durch ein Spritzgussverfahren mit Fluidinjektion hergestellt sind, welches wenigstens die nachfolgenden Verfahrensschritte umfasst:
- der wenigstens teilweise verflüssigte Faserverbundwerkstoff (20) wird in eine Kavität (3) einer Werkzeugeinrichtung (50) eingespritzt;
- in den wenigstens noch teilweise flüssigen Faserverbundwerkstoff (20) innerhalb der Kavität (3) wird wenigstens ein Fluid (4) zur Formung wenigstens einer Hohlkammer (5) innerhalb der Teilkomponente (2) injiziert,
und wobei wenigstens eine weitere Teilkomponente (2a), welche wenigstens einen Teil einer Speiche (109) bildet, durch ein Spritzgussverfahren hergestellt ist, welches wenigstens die nachstehenden Verfahrensschritte umfasst:
- innerhalb wenigstens einer weiteren Kavität (3) der Werkzeugeinrichtung (50) wird eine Formkerneinrichtung (52) zur Formung wenigstens einer Hohlkammer (5) innerhalb der weiteren Teilkomponente (2a) angeordnet;
- der Faserverbundwerkstoff (20) wird in die wenigstens eine weitere Kavität (3) zur Bildung der anderen Teilkomponente (2a) eingespritzt;
- die Formkerneinrichtung (52) wird aus dem wenigstens teilweise erstarrten Faserverbundwerkstoff (20) herausgezogen, um einen Hohlraum (109b) in der Speiche (10) zu bilden.

2. Laufradkomponente (1) nach Anspruch 1, wobei Teilkomponenten (2, 2a) der Speichen (109) und der Felge (111) einstückig miteinander verbunden sind und wobei wenigstens einige Hohlkammern (5) der Teilkomponenten (2) der Felge (111) voneinander getrennt sind.

3. Laufradkomponente (1) nach einem der vorhergehenden Ansprüche, wobei ein Nabenkörper (10) an der Werkzeugeinrichtung (50) aufgenommen und zentriert wird, sodass der Nabenkörper (10) wenigstens teilweise innerhalb wenigstens einer weiteren Kavität (3) angeordnet ist,
und wobei der wenigstens teilweise verflüssigte Faserverbundwerkstoff (20) in die weitere Kavität (3) der Werkzeugeinrichtung (50) eingespritzt wird, sodass der Nabenkörper (10) von dem Faserverbundwerkstoff (20) umspritzt und in einer zentralen Teilkomponente (2c) eingegossen ist, und wobei der Nabenkörper (10) wenigstens ein Formelement (10a) aufweist, welches von dem Faserverbundwerkstoff (20) umschlossen wird und wenigstens einen Formschluss zwischen dem Nabenkörper (10) und dem Faserverbundwerkstoff (20) der zentralen Teilkomponente (2c) bildet.

4. Laufradkomponente (1) nach einem der vorhergehenden Ansprüche, wobei wenigstens eine Teilkomponente (2) sich in Umfangsrichtung erstreckt und als Umfangskomponente ausgebildet ist und ein Felgensegment (111) einer Felge (lila) bildet,
und wobei wenigstens eine (andere) Teilkomponente (2a) als Radialkomponente radial ausgerichtet ist und wenigstens einen Teil einer Speiche (109) bildet und wobei die Hohlkammer (5) in der Speiche (109) einen Speichenhohlraum (109b) bildet und wobei eine zentrale Teilkomponente (2c) mit dem daran aufgenommenen Nabenkörper (10) über die Radialkomponente (2a) mit der Umfangskomponente (2) verbunden ist.

5. Laufradkomponente (1) nach dem vorhergehenden Anspruch, wobei sich die Hohlkammer (5) in der Speiche (109) radial nach außen durch die Umfangskomponente (2) hindurch erstreckt, wo eine Aufnahmevertiefung (18) ausgebildet ist, welche durch eine Abdeckkappe (19) abgedeckt wird und wobei die Abdeckkappe (19) einen Teil eines Felgenbettes (17) bildet.

6. Laufradkomponente (1) nach einem der vorhergehenden Ansprüche, wobei der Faserverbundwerkstoff Fasern mit einer Länge zwischen 3 mm und 20 mm und vorzugsweise mit einer Länge zwischen 8 mm und 20 mm umfasst.

7. Verfahren zur Herstellung einer Laufradkomponente (1) für wenigstens teilweise muskelbetriebene Fahrzeuge und insbesondere Fahrräder (100) mit einer Mehrzahl von Teilkomponenten (2, 2a, 2b), die einstückig miteinander verbunden werden und die eine Felge (111) und eine Mehrzahl von einstückig damit ausgebildeten Speichen (109) bilden, wobei die Felge (111) und die Speichen (109) durch Spritzgießen aus wenigstens einem Faserverbundwerkstoff (20) hergestellt werden, umfassend wenigstens die nachfolgenden Verfahrensschritte:
- Einspritzen des wenigstens teilweise verflüssigten Faserverbundwerkstoffs (20) in wenigstens eine Kavität (3) einer Werkzeugeinrichtung (50);
Injektion wenigstens eines Fluids (4) in den wenigstens noch teilweise flüssigen Faserverbundwerkstoff (20) innerhalb der Kavität (3) zur Formung wenigstens einer Hohlkammer (5) innerhalb der erstarrten Teilkomponente (2), wodurch die Teilkomponenten (2) der Felge (111) gebildet werden;
und wobei wenigstens eine weitere Teilkomponente (2a), welche wenigstens einen Teil einer Speiche (109) bildet, mit folgenden Verfahrensschritten hergestellt wird:
- innerhalb wenigstens einer weiteren Kavität (3) der Werkzeugeinrichtung (50) wird eine Formkerneinrichtung (52) zur Formung wenigstens einer Hohlkammer (5) innerhalb der weiteren Teilkomponente (2a) angeordnet;
- der Faserverbundwerkstoff (20) wird in die wenigstens eine weitere Kavität (3) zur Bildung der anderen Teilkomponente (2a) eingespritzt;
- die Formkerneinrichtung (52) wird aus dem wenigstens teilweise erstarrten Faserverbundwerkstoff (20) herausgezogen, um einen Hohlraum (109b) in der Speiche (10) zu bilden;
die Laufradkomponente (1) mit der Felge (111) und den einstückig damit verbundenen Speichen (109) wird aus der Werkzeugeinrichtung (50) entnommen.

8. Verfahren nach dem vorhergehenden Anspruch, wobei das Fluid (4) injiziert wird, wenn der Faserverbundwerkstoff (20) wenigstens teilweise an einer Wandung (3a) der Kavität (3) erstarrt ist und eine Wandung (7) der Teilkomponente (2) bildet, und wobei die Wandung (3a) der Kavität (3) wenigstens teilweise gekühlt wird,
und wobei die Kavität (3) vor dem Injizieren des Fluids (4) vollständig mit dem Faserverbundwerkstoff (20) gefüllt wird, sodass der flüssige Faserverbundwerkstoff (20) durch die Injektion des Fluids (20) wenigstens teilweise aus der Kavität (3) in ein Überlaufvolumen (8), verdrängt wird.

9. Verfahren nach einem der beiden vorhergehenden Ansprüche, wobei die Werkzeugeinrichtung (50) wenigstens zwei Kavitäten (3) zur Herstellung von zwei Teilkomponenten (2, 2a) umfasst, und wobei die Kavitäten (3) miteinander verbunden sind, und wobei in jede Kavität (3) Faserverbundwerkstoff (20) eingespritzt wird, so dass sich der Faserverbundwerkstoff (20) zu einer einstückigen Laufradkomponente (1) verbindet.

10. Verfahren nach einem der drei vorhergehenden Ansprüche, wobei das Fluid (4) eine Flüssigkeit wie Wasser umfasst.

11. Vorrichtung mit einer Werkzeugeinrichtung (50) zur Herstellung einer Laufradkomponente (1) für wenigstens teilweise muskelbetriebene Fahrzeuge und insbesondere Fahrräder (100),
wobei die Werkzeugeinrichtung (50) dazu dient, Laufradkomponenten (1) herzustellen, die eine Mehrzahl von Teilkomponenten (2, 2a, 2b) umfassen, wobei die Teilkomponenten (2, 2a, 2b) einstückig miteinander verbunden sind und eine Felge (111) und eine Mehrzahl von einstückig damit ausgebildeten Speichen (109) bilden, wobei die Felge (111) und die Speichen (109) durch Spritzgießen von Faserverbundwerkstoff (20) in der Werkzeugeinrichtung (50) hergestellt werden,
wobei die Werkzeugeinrichtung (50) zur Ausbildung der Teilkomponenten (2) der Felge (111) und der Speichen (109) wenigstens zwei Formeinrichtungen (51a) umfasst, welche Kavitäten (3) zur Formung einer Mehrzahl von einstückig miteinander verbundenen Teilkomponenten (2, 2a, 2b) der Laufradkomponente (1) bilden, wobei zur Ausbildung wenigstens einer Teilkomponente der Felge wenigstens eine Einspritzöffnung (53) zum Einspritzen eines wenigstens teilweise flüssigen Faserverbundwerkstoffs (20), und wenigstens eine Injektionsdüse (54) zur Injektion wenigstens eines Fluids (4) innerhalb der einen Kavität (3) zur Bildung wenigstens einer Hohlkammer (5) innerhalb der Teilkomponente (2) der Felge (111) umfasst ist,
und wobei die Werkzeugeinrichtung (50) wenigstens eine weitere Kavität (3) umfasst, welche mit der Kavität (3) mit der Einspritzöffnung (53) verbunden ist,
und wobei die Werkzeugeinrichtung (50) eine Mehrzahl von Formkerneinrichtungen (52) umfasst, welche zur Formung von Hohlkammern (5) in den Speichen (109) als Teilkomponenten jeweils in die weiteren Kavitäten (3) einfahrbar und wieder ausfahrbar sind.

12. Vorrichtung mit einer Werkzeugeinrichtung (50) nach dem vorhergehenden Anspruch, umfassend wenigstens eine Aufnahmeeinrichtung (55) zur wenigstens teilweisen Anordnung eines Nabenkörpers (10) innerhalb der weiteren Kavität (3).

13. Vorrichtung mit einer Werkzeugeinrichtung (50) nach einem der beiden vorhergehenden Ansprüche, umfassend wenigstens vier oder fünf gleiche Werkzeugsegmente (51), wobei jedes Werkzeugsegment (51) jeweils wenigstens eine Kavität (3) und wenigstens eine Spritzgusseinrichtung (56) mit wenigstens einer Injektionsdüse (54) zur Ausbildung von Felgensegmenten der Felge umfasst.

14. Vorrichtung mit einer Werkzeugeinrichtung (50) nach einem der drei vorhergehenden Ansprüche, wobei jedes Werkzeugsegment (51) wenigstens ein separates Überlaufvolumen (8), insbesondere eine Überlaufkavität (8a), aufweist.

15. Vorrichtung mit einer Werkzeugeinrichtung (50) nach einem der vier vorhergehenden Ansprüche, wobei jedes Werkzeugsegment (51) wenigstens eine Einspritzöffnung (53) zum Einspritzen eines wenigstens teilweise flüssigen Faserverbundwerkstoffs (20) und wenigstens eine zugeordnete Injektionsdüse (54) zur Injektion wenigstens eines Fluids (4) zur Ausbildung von Hohlkammern in den Felgensegmenten und jeweils eine gesteuert verfahrbare Formkerneinrichtung (52) zur Ausbildung von Hohlkammern in den Speichen aufweist.
